# EUROPÄISCHE PATENTSCHRIFT

(11) **EP 0 480 007 B1**
(45) Veröffentlichungstag und Bekanntmachung des Hinweises auf die Patenterteilung: **26.10.1994**
(21) Anmeldenummer: 91908420.2
(22) Anmeldetag: 17.04.1991
(51) Int. Cl.: H01R 13/703

(54) **VORRICHTUNG ZUR VERBINDUNG VON STEUERSTROMLEITUNGEN**
DEVICE FOR CONNECTING CONTROL CURRENT LINES
DISPOSITIF DE CONNEXION DE LIGNES DE COURANT DE COMMANDE

(30) Priorität: 26.04.1990 DE 4013310
(43) Veröffentlichungstag der Anmeldung: 15.04.1992
(73) Patentinhaber: Klöckner-Moeller GmbH, 53115 Bonn (DE)
(72) Erfinder: HEIN, Joachim, D-5000 Köln 51 (DE); WINKLER, Johannes, D-5303 Bornheim 4 (DE)
(86) Internationale Anmeldenummer: EP9100732
(87) Internationale Veröffentlichungsnummer: WO9116742

(56) Entgegenhaltungen:
- EP-A- 204 475
- DE-A- 3 114 837
- US-A- 3 588 399

## Beschreibung

Die Erfindung bezieht sich auf eine Vorrichtung zur Verbindung von Steuerstromleitungen, insbesondere für Geräteeinschübe in Niederspannungs-Schaltanlagen.

Niederspannungs-Schaltanlagen, wie Motorschaltanlagen oder Energieverteilunganlagen, werden seit vielen Jahren in der sogenannten Einschubtechnik ausgeführt, wenn eine schnelle Auswechselbarkeit der zu einer Funktionseinheit zusammengefaßter Komponenten gefordert ist, um niedrige Stillstandszeiten der elektrischen Betriebsmittel bei Wartungarbeiten oder kurze Betriebsunterbrechungen infolge defekter Funktionskomponenten zu erreichen.

Für Test- oder Wartungszwecke ist es heute üblich den Geräteeinschub in eine sogenannte Teststellung herein oder herauszuzienen, wobei lediglich der Laststrom unterbrochen wird und der Steuerstrom der einzelnen Funktionskomponenten in dieser Stellung erhalten bleibt.

Dies erreicht man dadurch, daß die Verbindungselemente, welche den Steuerstrom führen bereits in der Test-Stellung kontaktieren.

Durch weiteres Herausziehen des Geräteeinschubes wird auch die Steuerstromzuführung unterbrochen. Diese Stellung bezeichnet man üblicherweise als die sogenannte Trennstellung.

Die Stellung in der sowohl der Laststrom als auch der Steuerstrom zugeführt wird nennt man Ein-Stellung.

Ein Vorrichtung der gattungsgemäßen Art wird in der OS 2515152 beschrieben. Hierbei sind die Verbindungselemente als Gleitkontakte ausgeführt, die von der Einstellung bis zur Teststellung aneinander gleiten.

Hierbei kann sich durch die gleitenden metallischen Verbindungselemente schädlicher Abrieb entwickeln.

Eine weitere Kontakteinrichtung, die auch als Steuerstromverbindung geeignet ist, wird mittels eines Formschlusses realisiert. Diese ist in der OS 3114837 vorgestellt worden.

Die Nachlaufkontakt bezeichnete Verbindung besteht aus einem Kontaktfinger, der mit Erweiterungen zur formschlüssigen Verbindung mit einem Kontaktstift versehen ist, wobei die Verbindung durch eine Auslösehülse gelöst wird.

Diese Form der Verbindung hat den Nachteil, daß sie aufwendig und teuer ist und ein relativ großes Volumen aufweist. Sie eignet sich daher wenig für eine größere Anzahl von Steuerleitungen.

Der Erfindung liegt die Aufgabe zugrunde, einen Vorrichtung zur Verbindung von Steuerstromleitungen, insbesondere für Geräteeinschübe in Niederspannungs-Schaltanlagen mit einfachen Mitteln zu schaffen, welche die oben genannten Nachteile vermeidet.

Die Aufgabe wird durch den Kennzeichnungsteil des Anspruches 1 gelöst. Die beweglich Kontaktleiste kann den Weg des Einschubes zwischen der Test- und der Ein-Stellung mitgeführt werden, so daß für diesen Weg die Steuerleitungen verbunden bleiben.

Vorteilhaft ist hierfür die in Anspruch 2 gekennzeichnete Weiterbildung der Erfindung. Hierdurch erfolgt die Kontaktierung automatisch beim Einschieben vor Erreichen der Test-Stellung, während bei dem Herausziehen des Einschubes die Trennung der Test-Stellung ebenfalls automatisch erfolgt.

Dies kann insbesondere durch federnde Elemente erfolgen, die wie in den Ansprüchen 3 und 4 gekennzeichnet ist, die Bewegung der beweglichen Kontaktleiste durch eine Rastung behindern. Wobei es sich besonders vorteilhaft auswirkt, wenn die Rastung beim Einschieben so hart ist, daß die Kontaktleisten in einander durchgreifen, während sie beim Herasuziehen des Einschubs noch nicht getrennt werden, sondern diese Trennung von der Trenn-Stellung des Einschubes durch die Begrenzung der Führungsstifte erfolgt.

Ein bevorzugtes Ausführungsbeispiel der Erfindung ist in der Zeichnung schematisch dargestellt. Es zeigen
- Fig.1: eine auseinandergezogene perspektivische Darstellung der Erfindung,
- Fig.2: eine perspektivische Darstellung der Erfindung in zusammengesetzter Form,
- Fig.3: eine Aufsicht von oben auf die Vorrichtung in Ein-Stellung,
- Fig.4: eine Aufsicht von oben auf die Vorrichtung in Test-Stellung,
- Fig.5: und eine Aufsicht von oben auf die Vorrichtung in Trenn-Stellung.

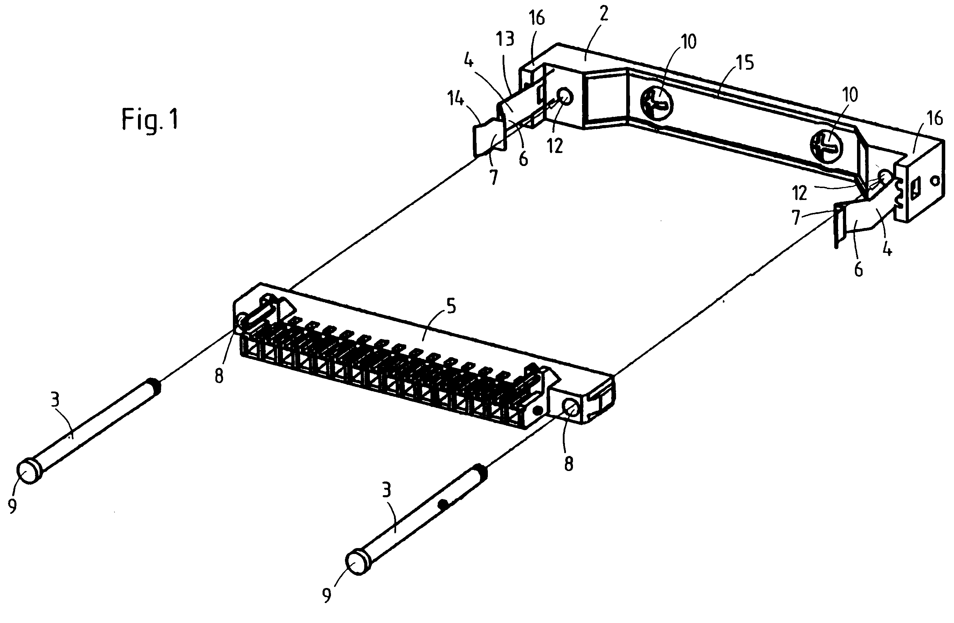

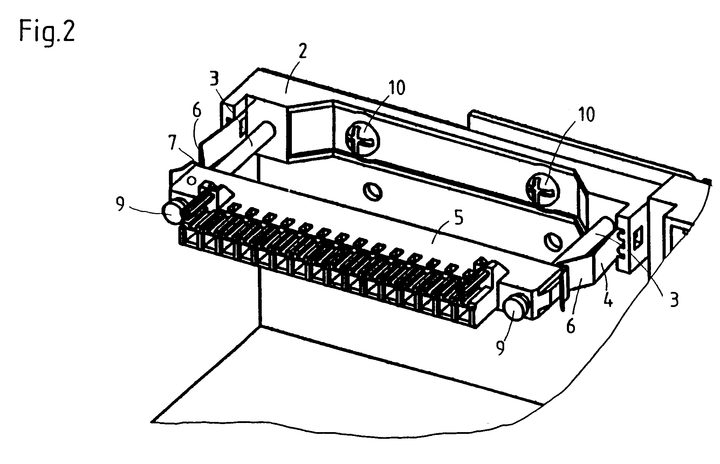

Die Vorrichtung 1 besteht, wie insbesondere in Fig.1 und Fig.2 zu sehen ist, aus einem Trägerelement 2, zwei Führungsstiften 3, zwei federnden Zungen 4 und einer Kontaktleiste 5 bekannter Art. Das Trägerelement 2 weist eine längliche Form auf und wird waagerecht im rückseitigen Bereich des Verteilerschrankes bzw. des Verteilergerüstes mit zwei Schrauben 10 befestigt.

Dieses trägt in seinen Endabschnitten jeweils eine nach vorne hervorstehende federnde Zunge 4.

Unmittelbar neben den federnden Zungen sind innenliegend zwei Gewindebohrungen zur Aufnahme der zwei Führugsstifte 3 angeordnet.

Im zusammengesetzten Zustand der Vorrichtung 1 ist die kontaktleiste 5 (hier als Buchsenleiste ausgeführt) mit den zwei Führungsstiften 3 über einen Gleitsitz in Steckrichtung (Pfeilrichtung A) verschiebbar gelagert. Dabei ragen die Führungsstifte 3 in die seitlich sich befindenden Bohrungen 8 der kontaktleiste hindurch und greifen mit ihrem den Kopf gegenüberliegenden Ende in die Gewindebohrungen 12 des Trägerelementes hinein.

Der Kopf der Führungsstifte 3 ist mit Querschnittsvergrößerungen 9 versehen und bildet für die Kontaktleiste 5 einen Anschlag.

Die federnde Zunge weist ab etwa in der Mitte der Länge einen Zungenabschnitt 6 auf, der mit einen Winkel von etwa 45° nach innen bis etwa zum Führungsstift abgeschrägt ist. Daran schließt sich ein Zungenabschnitt 7 an, der nach außen abgeschrägt ist. und einen Winkel von nahezu 90° aufweist,so daß dieser nahezu parallel zum Trägerelement verläuft.

Das Trägerelement 2 weist eine Einbuchtung 15 auf, in der die an der Rückseite der Kontaktleiste herausgeführten Leitungen Platz finden.

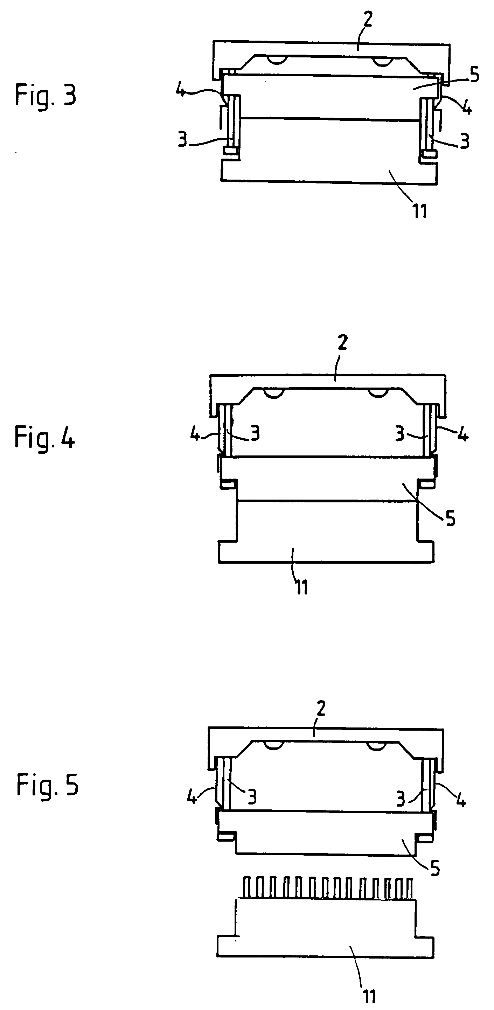

Die Kontaktleiste 11 (hier als Steckerleiste ausgeführt) der Steuerstromverbindung ist fest mit den Geräteeinschub verbunden. In der Ein-Stellung ist der Geräteeinschub vollständig eingeschoben, wobei auch die Buchsenleiste nach hinten eingeschoben ist und einen Kontakt mit der Steckerleiste herstellt, wie in Fig.3 zu erkennen ist.

In dieser Stellung ist sowohl der Laststrom als auch der Steuerstrom zugeführt.

Um eine Teststellung zu erreichen, wird der Geräteeinschub soweit herausgezogen bis die Buchsenleiste kurz vor den Anschlag steht, der durch den Kopf des Führungsstiftes gebildet wird. Hierbei wird die Buchsenleiste von den Führungsstiften entlang der Steckrichtung (Pfeilrichtung A) geführt.

Bei diesen Vorgang stoßen die Seitenabschnitte der Buchsenleiste an die Zungenabschnitte 6 und drücken die federnden Zungen nach außen, wobei die Federkraft der Zungen so ausgelegt ist, daß dabei der Kontakt zwischen der Buchsenleiste und der Steckerleiste noch erhalten bleibt.

Hat die Buchsenleiste den Zungenabschnitt 6 überschritten, fallen die federnden Zungen in die Ausgangsposition zurück. Der Geräteeinschub hat nun die Teststellung eingenommen, wobei der Laststrom bei dem Herausziehen unterbrochen worden ist, so daß nur noch der Steuerstrom erhalten bleibt.

Die Teststellung ist in Fig.4 zu sehen.

Wird der Geräteeinschub über die Teststellung hinaus gezogen, findet die Buchsenleiste an dem Kopf des Führungsstiftes einen Anschlag, so daß der Kontakt beim weiteren Herausziehen durch lösen der Steckerleiste von der Buchsenleiste unterbrochen wird und somit auch die Steuertromzufuhr unterbrochen wird. Diese Stellung ist in Fig.5 zu sehen und wird üblicherweise als Trenn-Stellung bezeichnet.

Bei dem Wiedereinschieben des Geräteeinschubes in das Verteilergehäuse greift die Steckerleiste wieder in die Buchsenleiste, wobei die Buchsenleiste von den Zungenabschnitten 7 aufgrund der höheren Steilheit solange gehalten wird bis eine vollständige Kontaktgabe hergestellt ist. Diese Stellung entspricht wieder der Test-Stellung.

Die Zungen geben schließlich beim weiteren Hineinschieben des Geräteeinschubes aufgrund der steigenden Kraft, die auf diese wirkt, nach und federn nach außen auseinander, so daß der Gerateeinschub in die Einstellung gebracht werden kann.

## Patentansprüche

1. Vorrichtung zur Verbindung von Steuerstromleitungen insbesondere für Geräteeinschübe in Niederspannungs-Schaltanlagen, bestehend aus Steckerelmenenten, und Buchsenelementen, die in einer ersten Stellung (Test-Stellung) des Einschubes kontaktieren und diese Verbindung bis zu einer zweiten Einschubstellung (Ein-Stellung) aufrechterhalten, **dadurch gekennzeichnet**, daß die Stecker- und Buchsenelemente in zwei Kontaktleisten (5, 11) angeordnet sind, von denen eine fest arretiert ist, während die andere für einen begrenzeten Weg beweglich angeordnet ist.

2. Vorrichtung nach Anspruch 1, **dadurch gekennzeichnet**, daß die bewegliche Kontaktleiste dem Bewegungsablauf des Einschubes derart folgt, daß beim Einschieben vor Erreichen der Stellung "Test" eine Rastung vorgesehen ist, in der die bewegliche Kontaktleiste verrastet ist und ein Kontaktaktieren der Stecker- und Buchsenelemente bewirkt, daß bei einer weiteren Bewegung des Einschubes in die "Ein"-Stellung die verbundenen Kontaktlesiten mitgeführt werden und daß bei der Bewegung des Einschubes in Richtung der "Trenn"-Stellung die Bewegung der beweglichen Kontaktleiste nach Überfahren der "Test"-Stellung vor Erreichen der "Trenn"-Stellung, begrenzt wird, so daß sich die beiden Kontaktleisten (5, 11) wieder im sicheren Abstand vor dem Erreichen der "Trenn"-Stellung bereits trennen, wobei die bewegliche Kontaktleiste in der ursprünglichen Stellung zwischen Rastung und Begrenzung verrastet bleibt.

3. Vorrichtung nach Anspruch 1 oder 2, **dadurch gekennzeichnet**, daß die bewegliche Kontaktleiste (5) an einem Trägerelement (2) auf vorzugsweise zwei Führungsstiften 83) verschiebbar angeordnet ist, daß die Führungsstifte (3) eine Querschnittsvergrößerung (9) aufweisen, die die Bewegung der beweglichen Kontaktleiste (5) begrenzt, und daß an dem Trägerelement (2) federnde Elemente (4) angeordnet sind, die eine Rastung der beweglichen Kontaktleiste (5) bewirken.

4. Vorrichtung nach einem der Ansprüche 1 bis 3, **dadurch gekennzeichnet**, daß an dem Trägerelement (2) federnde Elemente (4) vorgesehen sind, die in Richtung der Kontaktleiste (5) eine Abkröpfung aufweisen, die derart geformt ist, daß eine erste schräge Fläche (6), die in Richtung des Trägerelementes (2) liegt eine geringe Steilheit aufweist, während eine zweite schräge Fläche (7) eine höhere Steilheit aufweist, und daß die Abkröpfungen so angeordnet sind, daß sie mit den Stirnseiten der Kontaktleiste (5) im Sinne einer Rastung zusammen wirken.

5. Vorrichtung nach einem der Ansprüche 1 bis 4, **dadurch gekennzeichnet**, daß die Federkraft der federnden Elementen beim Herausziehen des Geräteeinschubes bis zur Test-Stellung derart bemessen ist, daß der Kontakt zwischen der beweglichen Kontaktleiste und der an der Einschubrückwand befestigten Kontaktleiste aufgrund der geringeren Steilheit der schrägen Fläche (6) nicht unterbrochen wird, während beim Hineinschieben des Einschubes von der Trenn-Stellung in die Test-Stellung, aufgrund der Steilheit der zweiten Schrägen Fläche (7) eine vollständige Kontaktgabe zwischen den Kontaktleitsten (5, 11) erreicht wird.

## Claims

1. Device allowing the connection of control current lines particularly in plug-in units for low-voltage switching plants consisting of plug elements and socket elements which enter into contact in a first position (test position) of the plug-in unit and maintain this connection up to a second plug-in position ("on" position) **in which** plug and socket elements are arranged in two contact boards (5, 11), one contact board being fixed and the other being arrange in a movable way along a limited distance.

2. A device as claimed in claim 1 **wherein** the movable contact board follows the movement of the plug-in unit in such a way that a snap-in effect occurs during insertion prior to the "test" position, this snap-in effect locks the movable contact board and brings about the contacting of plug and socket elements and wherein the connected contact boards are carried along during a further movement of the plug-in unit into "on" position and wherein the movement of the movable contact board is limited after crossing the "test" position and before reaching the "cut off" position during the movement of the plug-in unit in the direction towards the "cut off" position in such a way that the two contact boards (5, 11) disconnect already at a safe distance before reaching the "cut off" position while the movable contact board remains locked in the original position between snap-in and delimitation.

3. A device as claimed in claim 1 or 2 **wherein** the movable contact board (5) is arranged in a movable way on a preferred number of two guiding pins (3) on a support element (2), wherein the guiding pins (3) present and enlarged cross-section (9) which limits the movement of the movable contact board (5) and wherein spring elements (4) are arranged on the support element (2) which bring about the locking of the movable contact board (5).

4. A device as claimed in any claim 1 through 3 **wherein** support element (2) provides spring elements (4) which provide an angular bend directed towards contact board (5), this bend being formed in such a way that a first inclined surface (6) is located in the direction of the supporting element (2) and presents a less steep angle while a second inclined surface (7) presents a steeper angle and wherein the bends are arranged to cooperate with the front sides of the contact board (5) for the purpose of locking.

5. A device as claimed in any claim 1 through 4 **wherein** the spring force of the spring elements acting during the withdrawal of the plug-in unit into test position has been dimensioned in such a way that the less steep angle of the inclined surface (6) prevents the cutting of the contact between the movable contact board and the contact board fixed to the rear wall of the plug-in, while the steep angle of the second inclined surface (7) makes for complete contacting between the two contact boards (5,11) during the insertion of the plug-in unit from cut-off position into test position.

## Revendications

1. Dispositif permettant la liaison de lignes de courant de commande destiné notamment à des éléments enfichables utilisés dans des installations de couplage à basse tension, dispositif comprenant des éléments à fiches et des éléments à douilles qui entrent en contact dans une première position (position d'essai) de l'élément enfichable et qui maintiennent ce contact jusqu'à une deuxième position d'insertion (position enclenchée), **caractérisé en ce que** les éléments à fiches et à douilles sont aménagés sur deux réglettes à contacts (5, 11) dont une réglette est arrêtée de manière fixe tandis que l'autre est logée mobile sur un chemin limité.

2. Dispositif selon la revendication 1, **caractérisé en ce que** la réglette à contacts mobiles suit le mouvement de l'élément enfichable de telle manière à ce que un encliquetage est prévu avant d'avoir atteint la position "d'essai" au cours de l'insertion, encliquetage qui bloque la réglette à contacts mobiles et met en contact les éléments à fiches et à douilles, en ce que les réglettes à contacts reliées sont amenées lors d'un mouvement ultérieur de l'élément enfichable dans la position "enclenchée" et en ce que le mouvement de la réglette à contacts mobiles est limité après avoir dépassé la position "d'essai" et avant d'arriver à la position "de coupure" lors du mouvement de l'élément enfichable dans la direction de la postion "de coupure" de manière à ce que les deux réglettes de contacts (5, 11) se séparent déjà à une distance sûre avant l'arrivée en position "de coupure", la réglette à contacts mobiles restant bloquée dans la position originale entre l'encliquetage et la limite.

3. Dispositif selon l'une quelconque des revendications 1 ou 2, **caractérisé en ce que** la réglette à contacts mobiles (5) est logée coulissante sur un élément porteur (2) et, de préférence, sur deux tiges de guidage (3), en ce que les tiges de guidage (3) présentent une section élargie (9) qui limite le mouvement de la réglette à contacts mobiles (5) et en ce que des éléments élastiques (4) sont aménagés sur l'élément porteur (2), éléments élastiques (4) effectuant l'encliquetage de la réglette à contacts mobiles (5).

4. Dispositif selon l'une quelconque des revendications 1 à 3, **caractérisé en ce que** des éléments élastiques (4) sont prévus sur l'élément porteur (2), éléments élastiques présentant un angle prévu du côté de la réglette de contacts (5), angle aménagé dans une telle forme qu'une première surface inclinée (6) située du côté de l'élément porteur (2) présente une inclinaison faible, tandis qu'une deuxième surface inclinée (7) présente une inclinaison supérieure, et en ce que les angles sont aménagés de manière à ce qu'ils coopèrent avec les fronts de la réglette à contacts (5) en produisant un effet d'encliquetage.

5. Dispositif selon l'une quelconque des revendications 1 à 4, **caractérisé en ce que**, en retirant l'élément enfichable jusqu'à la position d'essai, la force élastique des éléments élastiques est dimensionnée de telle manière à ce que le contact entre la réglette à contacts mobiles et la réglette à contacts fixée à la paroi à l'arrière de l'élément enfichable n'est pas coupé en raison de l'inclinaison moins importante de la surface inclinée (6), tandis qu'une mise en contact complète entre les réglettes à contacts (5, 11) est obtenue grâce à l'inclinaison de la deuxième surface inclinée (7) au cours de l'insertion de l'élément enfichable de la position de coupure jusqu'à la position enclenchée.
